# EUROPEAN PATENT SPECIFICATION

(11) **EP 2 627 119 B1**
(45) Date of publication and mention of the grant of the patent: **24.12.2014**
(21) Application number: 11835648.4
(22) Date of filing: 31.10.2011
(51) Int. Cl.: H04W 28/10, H04L 29/06, H04W 76/06, H04W 52/02, H04L 29/08, H04W 88/12

(54) **METHOD AND DEVICE FOR DELAYED RELEASE OF TEMPORARY BLOCK FLOW**
VERFAHREN UND VORRICHTUNG ZUR VERZÖGERTEN FREISETZUNG EINES TEMPORÄREN BLOCKSTROMS
PROCÉDÉ ET DISPOSITIF DE LIBÉRATION RETARDÉE DE FLUX DE BLOCS TEMPORAIRE

(30) Priority: 29.10.2010 CN 201010524989
(43) Date of publication of application: 14.08.2013
(73) Proprietor: Huawei Technologies Co., Ltd., Shenzhen, Guangdong 518129 (CN)
(72) Inventor: YANG, Kai, Shenzhen Guangdong 518129 (CN)
(74) Representative: Maiwald Patentanwalts GmbH
(86) International application number: PCT/CN2011/081581
(87) International publication number: WO 2012/055375

(56) References cited:
- WO-A1-02/17573
- CN-A- 101 355 573
- CN-A- 101 641 898
- CN-A- 101 977 405
- US-A1- 2002 082 033
- US-A1- 2005 064 888
- "Delayed TBF Release", 3GPP TSG GERAN ADHOC, XX, XX, no. #3, 11 December 2000 (2000-12-11), pages 1-3, XP002293157,
- SAMSUNG: "Provisioning Extended UL TBF and delayed DL TBF on a per TBF basis", 3GPP DRAFT; GP-100307, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Berlin; 20100301, 26 February 2010 (2010-02-26), XP050416702, [retrieved on 2010-02-26]
- "Digital cellular telecommunications system (Phase 2+); General Packet Radio Service (GPRS); Mobile Station (MS) - Base Station System (BSS) interface; Radio Link Control / Medium Access Control (RLC/MAC) protocol (3GPP TS 44.060 version 9.5.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP GERAN 2, no. V9.5.0, 1 October 2010 (2010-10-01), XP014061735,

## Description

### TECHNICAL FIELD

The present invention relates to the field of radio communication technologies, and in particular, to a method and an apparatus for delayed release of a temporary block flow.

### BACKGROUND

At present, a general packet radio service (General Packet Radio Service, GPRS) technology has been widely applied in a radio communication network. A GPRS network implements end-to-end data transmission for a packet service by using a packet switch (Packet Switch) technology, and provides users with more abundant types of services such as web page browsing, file downloading, and online gaming.

In a GPRS system, a temporary block flow (Temporary Block Flow, TBF) is a connection between a mobile station (Mobile Station, MS) and a network side. Packet service data is transmitted between the MS and the network side through a TBF, and a TBF connection exists only in a process of packet data transmission.

When no uplink or downlink data is being sent, a corresponding TBF connection enters an inactive state to save a resource; however, the connection is still maintained, and it is ensured, by sending some information, that the TBF connection is not released. After a delay period, the network side releases the corresponding TBF connection if no new packet service data arrives.

According to the foregoing described technical concept, some resources are still wasted.

WO 02/17573 A1 relates to a method and an arrangement for transferring information in a packet radio service. Especially the invention applies to transferring delay sensitive data, such as speech and video data, in a mobile cellular telecommunications system. It is an object of this invention to provide a solution, in which the physical connection of a packet radio service is kept reserved also during the passive periods of a session but the same physical resource can still be shared between multiple users. In the present solution after the end of an active period of data transmission a predetermined time period is waited until the connection is released. The length of the time period is informed to the mobile station by the network on a dedicated or on a broadcast channel. The length of the time period is preferably made dependent on the required quality of service value of the connection and on the momentary communication activity in the network or cell.

"Delayed TBF Release", XP002293157, discloses a method for resolving problems about resource utilization and transmission delay. The method includes that when a block having CV=0 has been sent, the TBF is not released but a timer is started, and the timeout period should be configurable based on the traffic type.

"Provisioning Extended UL TBF and delayed DL TBF on a per TBF basis", GP-100307, discloses the criteria for invoking extended UL/ delayed DL TBF.

"Digital cellular telecommunications system (Phase 2+); General Packet Radio Service (GPRS); Mobile Station (MS) - Base Station System (BSS) interface; Radio Link Control/Medium Access Control (RLC/MAC) protocol (3GPP TS 44.060 version 9.5.0 Release 9), ETSI TS 144 060 version 9.5.0 (2010-10), specifies procedures for layers, Radio Link Control (RLC) and Medium Access Control (MAC), of the radio interface, the interface between the GERAN and the MS.

US 2002/082033 A1 relates to a wireless communications system includes a mobile station and a base station system that are capable of communicating on the wireless links (uplink and downlink). The mobile station is capable of establishing a logical connection, such as a temporary block flow, on the uplink, while the base station system establishes a logical connection on the downlink. When either the mobile station or the base station system detects end of data transmission, a predetermined wait period is started during which the mobile station or base station system does not start a procedure to release the logical connection on the uplink

### SUMMARY

Embodiments of the present invention provide a method and an apparatus for delayed release of a temporary block flow, so as to satisfy an actual requirement of a network side and use a network resource more efficiently.

The embodiments of the present invention may be implemented by using the following technical solutions.

In one aspect, a method for delayed release of a temporary block flow TBF is provided, and the method includes:
establishing, by a network side, a TBF connection with a mobile station, MS, and transmitting packet service data;
checking, by the network side, a type of a packet service that the TBF connection bears;
setting, by the network side, delayed release time t of the TBF connection according to the checked service type;
if the TBF connection is a downlink TBF connection, sending, by the network side, packet service data to the MS through the downlink TBF connection;
checking, by the network side, whether the type of the packet service that the TBF connection bears changes in a data transmission process, if a change occurs, resetting the delayed release time t of the TBF connection according to a changed packet service type after the type of the packet service that the TBF connection bears changes;
making, by the network side, the TBF connection enter a delayed release state after data transmission through the TBF connection is completed; and
releasing, by the network side, the TBF connection if duration of the delayed release state of the TBF connection reaches the t.

An apparatus for delayed release of a temporary block flow TBF is provided, and the apparatus includes:
a setting module, configured to, if a TBF connection satisfies a preset condition, set delayed release time t corresponding to the condition as delayed release time of the TBF connection;
a state module, configured to make the TBF connection enter a delayed release state after data transmission through the TBF connection is completed; and
a releasing module, configured to release the TBF connection if duration of the delayed release state of the TBF connection reaches the t;
the setting module, further configured to change the delayed release time t of the TBF connection according to a changed packet service type after the type of the packet service that the TBF connection bears changes.

In the embodiments of the present invention, different delayed release time may be set for a TBF connection according to a different condition, so as to satisfy an actual requirement of a network side better and use a network resource more efficiently.

### BRIEF DESCRIPTION OF DRAWINGS

FIG. 1 is a schematic flowchart of a method for delayed release of a TBF according to an embodiment of the present invention;
FIG. 2 is a schematic flowchart of a method for delayed release of a TBF according to another embodiment of the present invention;
FIG. 3 is a schematic flowchart of a method for delayed release of a TBF according to another embodiment of the present invention;
FIG. 4 is a schematic flowchart of a method for delayed release of a TBF according to another embodiment of the present invention; and
FIG. 5 is a schematic structural diagram of an apparatus for delayed release of a TBF according to an embodiment of the present invention.

### DESCRIPTION OF EMBODIMENTS

To make the objectives, technical solutions, and advantages of the present invention clearer, the technical solutions provided in the present invention are described in further detail in the following with reference to the accompanying drawings and exemplary embodiments.

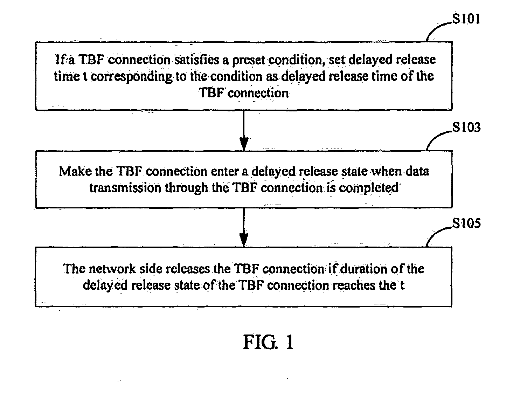

Referring to FIG. 1, a method for delayed release of a TBF is provided in an embodiment related to but not covered by the present invention and includes the following steps.
S101: If a TBF connection satisfies a preset condition, set delayed release time t corresponding to the condition as delayed release time of the TBF connection.

When a TBF connection is established, a network side checks whether the preset condition is satisfied, if the preset condition is satisfied, obtains delayed release time t that corresponds to the preset condition, and takes the delayed release time t as a parameter and sets the delayed release time t as delayed release time of the TBF connection. Different conditions may correspond to different delayed release time.

Generally, a TBF connection is used to bear a packet service between a network side and an MS. When data needs to be transmitted between the MS and the network side, the TBF connection is established. A TBF establishment procedure is controlled by the network side. The network side may establish the TBF connection with the MS according to a request of the MS or according to a protocol data unit (Protocol Data Unit, PDU) forwarded by a core network.

When transmission for current packet service data is completed, the TBF connection is not released immediately, but enters an inactive state. In the inactive state, the TBF connection is maintained at the network side, and it is ensured, by sending some information, that the TBF connection is not released. After the inactive state lasts a period of time, if no packet service data that needs to be transmitted through the TBF connection is received by the network side, the network side releases the TBF connection. This period of time in which the TBF connection is in the inactive state until the TBF connection is released is referred to as delayed release time and a state of the TBF connection in this period is referred to as a delayed release state.

A TBF connection is classified into a downlink TBF connection and an uplink TBF connection. The downlink TBF connection is a TBF connection through which packet service data is sent from the network side to the MS; and the uplink TBF connection is a TBF connection through which packet service data is sent from the MS to the network side.

In this embodiment, the preset condition may be considered based on a cell network load, may also be considered based on a packet service type, and may also be considered based on a combination of the two of the cell network load and the packet service type. Definitely, another condition may also be used as a basis for determining delayed release time, to which this embodiment is not limited.

Longer delayed release time may be set if the cell network load is lighter, and shorter delayed release time may be set if the cell network load is heavier, so that a system resource is used more efficiently.

The cell network load may be represented by a percentage of the number of TBFs actually born on a unit channel of a cell to the maximum number of TBFs born on the unit channel. Definitely, another factor may also be used as a condition for determining the cell network load, to which this embodiment is not limited.

A packet service type may be an instant message (Instant Message, IM) service, for example, a service of IM chat tools such as QQ, Fetion, and MSN; or may be a World Wide Web service such as an HTTP service or a WAP service; or may also be an online streaming service such as an online video service or an online voice service; or may be a file transfer protocol (File Transfer Protocol, FTP) service.

The packet service type may be obtained according to the PDU, for example, a port number carried in the PDU, or according to QoS (Quality of Service) information when a packet service is established.
S103: Make the TBF connection enter a delayed release state when data transmission through the TBF connection is completed.

If current data at the network side has been sent to the MS through a downlink TBF connection, the downlink TBF connection is set to a delayed release mode, and the MS is instructed that the TBF connection enters the delayed release state.

Alternatively, if the MS finishes sending data to the network side through an uplink TBF connection, the network side sets the uplink TBF connection to a delayed release mode. The network side may determine, according to information carried in an uplink data block sent by the MS, whether more data needs to be transmitted from the MS.
S105: The network side releases the TBF connection if duration of the delayed release state of the TBF connection reaches the t.

For example, the TBF connection may be a downlink TBF connection. If the network side still does not receive packet service data forwarded by a core network, a buffer corresponding to the downlink TBF connection is empty. The network side releases the downlink TBF connection if the buffer remains empty after the time t expires.

Alternatively, the TBF connection may be an uplink TBF connection. The network side releases the uplink TBF connection if the network side still does not receive packet service data sent on the MS in a period of time.

As an example, the network side may be formed by a base station and a base station controller, and an executor in the foregoing embodiment may be a base station controller.

For example, when a downlink TBF connection is released, the base station controller may send a radio link control (Radio Link Control, radio link control) data block whose final block indicator (Final Block Indicator, FBI) = 1 to the MS, so as to instruct the MS that the downlink TBF connection is released, and after a response is received from the MS, instruct the base station to release a resource occupied by the TBF connection.

Alternatively, when an uplink TBF connection is released, the network side actively releases the uplink TBF connection if the network side does not receive packet service data sent by the MS through the uplink TBF connection within a time interval t.

With the method provided in this embodiment, different delayed release time may be set for a TBF connection according to a different condition, so as to satisfy an actual requirement of a network side and use a network resource more efficiently.

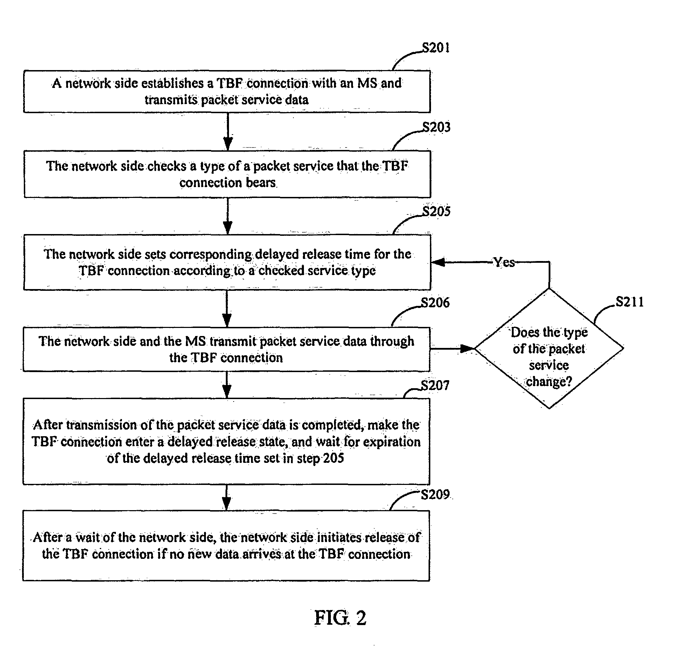

Referring to FIG. 2, a method for delayed release of a TBF connection is provided in another embodiment covered by the present invention. In this embodiment, a preset condition is considered based on a packet service type, and the method provided in this embodiment includes the following steps.
Step 201: A network side establishes a TBF connection with an MS and transmits packet service data.

The TBF connection may be an uplink TBF connection, and may also be a downlink TBF connection. Establishment of the TBF connection may be initiated by the network side actively, and the network side may also establish the TBF connection when receiving a request from the MS.
Step 203: The network side checks a type of a packet service that the TBF connection bears.
Step 205: The network side sets corresponding delayed release time for the TBF connection according to a checked service type.

A table of a corresponding relationship between a packet service type and delayed release time may be configured at the network side. Different service types may correspond to different delayed release time. The following table gives an example:

| Service Type | Delayed release Time |
|---|---|
| QQ and Fetion | 0.5 seconds |
| HTTP and WAP | 0.2 seconds |
| FTP | 2 seconds |

As an example, delayed release time of the TBF connection is set to 0.5 seconds if the TBF connection bears a QQ service; and delayed release time of the TBF connection is set to 0.2 seconds if the TBF connection bears an HTTP service. If the TBF connection bears multiple services, longest delayed release time may be selected.
Step 206: The network side and the MS transmit packet service data through the TBF connection.

If the TBF connection is an uplink TBF connection, the MS sends packet service data to the network side through the uplink TBF connection.

If the TBF connection is a downlink TBF connection, the network side sends packet service data to the MS through the downlink TBF connection.

Step 207: After transmission of the packet service data is completed, make the TBF connection enter a delayed release state, and wait for expiration of the delayed release time set in step 203.

For example, for the downlink TBF connection, the network side may determine, according to a buffer corresponding to the TBF, whether data transmission is completed; and for the uplink TBF connection, may determine, according to a countdown value CV (Countdown Value) reported by the MS, whether sending of data of the MS is completed.

When the network side determines that transmission of packet service data is completed, a timer may be started and a timeout threshold of the timer is set as the delayed release time. When the timer times out, it indicates that the delayed release time expires.
Step 209: After a wait of the network side, the network side initiates release of the TBF connection if no new data arrives at the TBF connection.

A downlink TBF connection is taken as an example. The network side waits for timeout of the timer. If a buffer of the TBF connection still has no data when the timer times out, the network side initiates release of the TBF connection, sends an RLC data block whose FBI is set to 1 to the MS, and after receiving a response from the MS, releases a network resource occupied by the TBF connection.

For an uplink TBF connection, when the timer times out, if the network side still does not receive data sent by the MS or does not obtain data information that needs to be sent by the MS, a packet uplink acknowledgment/non-acknowledgment PACKET UPLINK ACK/NACK message may be sent to the MS, where a final acknowledgment indicator (Final Acknowledgment Indicator, FAI) carried in the message is set to 1, and the MS is instructed to release the TBF connection and a network resource occupied by the TBF connection.

With the method provided in this embodiment, different delayed release time may be set according to a different service that TBF connection bears, so that a network resource may be used more efficiently, thereby improving utilization efficiency of a resource.

Further, the method provided in this embodiment may further include step 211, in which in a data transmission process, it is checked whether the type of the packet service that the TBF connection bears changes. If a change occurs, step 205 is executed, and the delayed release time of the TBF connection is reset according to a type of a packet service that the TBF connection bears.

For example, if the TBF connection bears a QQ service and an HTTP service at the same time, the delayed release time of the TBF connection is set to 0.5 seconds; and when an instruction message for terminating the QQ service is received from an upper layer, the delayed release time of the TBF connection is set to 0.2 seconds.

With the method provided in this embodiment, delayed release time may be dynamically set according to a case of a packet service that a TBF connection actually bears, so that a network resource may be used more efficiently.

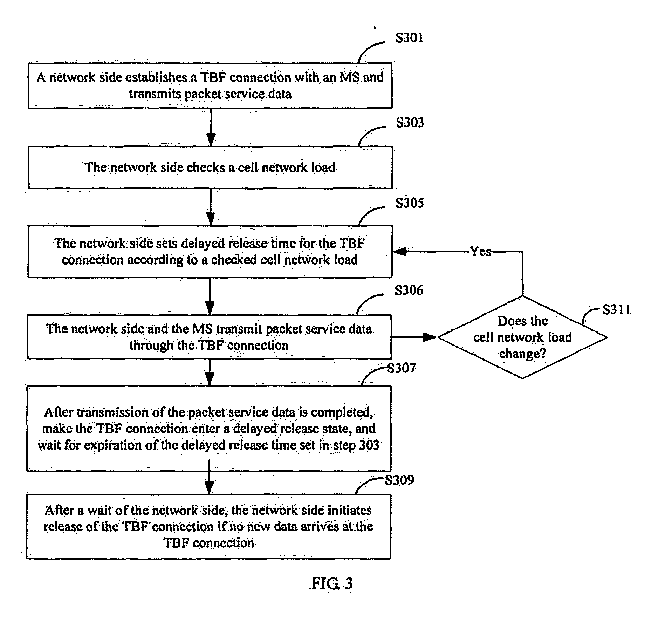

FIG. 3 is a schematic flowchart of a method for delayed release of a TBF connection according to another embodiment related to but not covered by the present invention, where the method includes:
Step 301: A network side establishes a TBF connection with an MS and transmits packet service data.

The TBF connection may be an uplink TBF connection, and may also be a downlink TBF connection.
Step 303: The network side checks a cell network load.
Step 305: The network side sets delayed release time for the TBF connection according to a checked cell network load.

Different cell network loads correspond to different delayed release time. If a load is heavy, delayed release time is short. If a load is light, delayed release time is long. The following gives an example:

| Cell Network Load | Delayed release Time |
|---|---|
| <50% | 5 seconds |
| 50-70% | 2 seconds |
| 70-90% | 1 second |
| >90% | 0 seconds |

0 seconds indicate that the TBF connection is immediately released when data transmission is completed. The cell network load may be measured according to a multiplexing degree of a packet channel.

For example, the cell network load may be obtained by dividing the number of TBF connections multiplexed on a packet channel by the maximum number of TBF connections that can actually be multiplexed on the packet channel.
Step 306: The network side and the MS transmit packet service data through the TBF connection.
Step 307: After transmission of the packet service data is completed, make the TBF connection enter a delayed release state, and wait for expiration of the delayed release time set in step 305.

After transmission of the packet service data is completed, the network side sets the TBF connection to a delayed release state and waits expiration of the delayed release time.
S309: After a wait of the network side, the network side initiates release of the TBF connection if no new data arrives at the TBF connection.

With the method provided in this embodiment, different delayed release time may be set according to a different network load, so that a network resource may be used efficiently.

Further, the method provided in this embodiment may further include step 311, in which in a data transmission process, it is checked whether the cell network load changes. If a change occurs, step 305 is executed, and the delayed release time of the TBF connection is reset according to a changed cell network load.

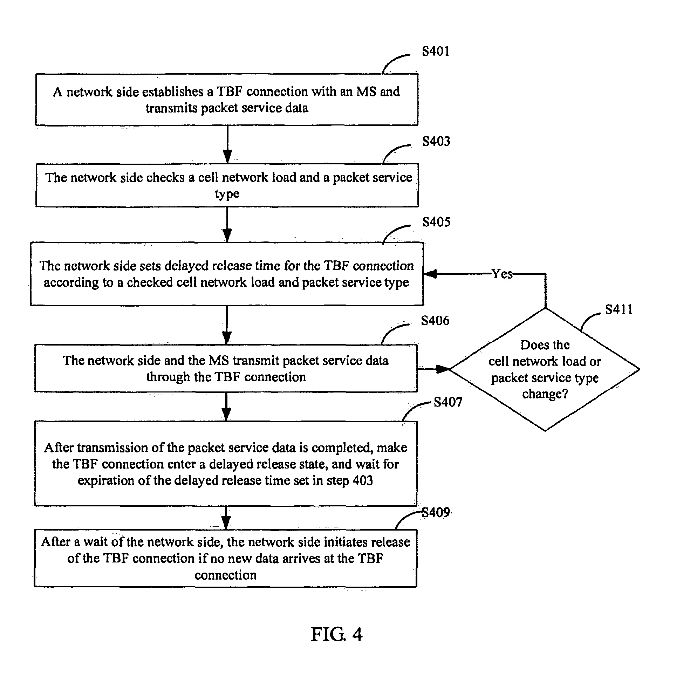

FIG. 4 is a schematic flowchart of a method for delayed release of a TBF according to another embodiment related to but not covered by the present invention, where the method includes:
Step 401: A network side establishes a TBF connection with an MS and transmits packet service data.
Step 403: The network side checks a cell network load and a packet service type.
Step 405: The network side sets delayed release time for the TBF connection according to a checked cell network load and packet service type.

Different cell network loads correspond to different delayed release time. If a load is heavy, delayed release time is short. If a load is light, delayed release time is long. In addition, different packet services also have different requirements on delays. For example, a delay for an instant message service may be longer, while a delay for an HTTP service may be shorter.

The following gives an example:

| Cell Network Load | Service Type | Delayed release Time |
|---|---|---|
| <50% | ALL | 5 seconds |
| 50-70% | QQ and Fetion | 0.5 seconds |
| | HTTP and WAP | 1 second |
| | FTP | 2 seconds |
| 70-90% | QQ and Fetion | 0.5 seconds |
| | HTTP and WAP | 0.5 seconds |
| | FTP | 1 second |
| >90% | ALL | 0 seconds |

Step 406: The network side and the MS transmit packet service data through the TBF connection.
Step 407: After transmission of the packet service data is completed, wait for expiration of the delayed release time set in step 405.
Step 409: After a wait of the network side, the network side initiates release of the TBF connection if no new data arrives at the TBF connection.

With the method provided in this embodiment, different delayed release time may be set according to a different network load and a different service type, so that a network resource may be used more efficiently.

Further, the method provided in this embodiment may further include step 411, in which in a data transmission process after step 405, it is checked whether the cell network load or the packet service type changes. If a change occurs, step 405 is re-executed, the table is searched and the delayed release time of the TBF connection is reset according to a changed cell network load or packet service type.

With the method provided in this embodiment, different delayed release time may be set for a TBF connection according to a network cell and a packet service type, so that a network resource is used efficiently.

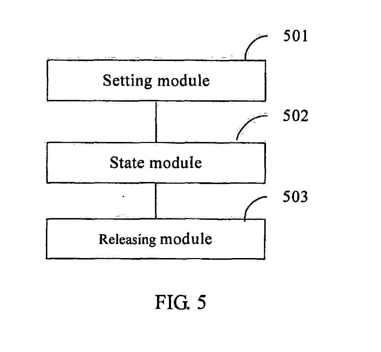

Referring to FIG. 5, FIG. 5 is a schematic structural diagram of an apparatus for delayed release of a temporary block flow TBF according to an embodiment. The apparatus provided in this embodiment may be configured to implement the foregoing method embodiments and is thus either related to or covered by the present invention and includes a setting module 501, a state module 502, and a releasing module 503.

The setting module 501 is configured to, if a TBF connection satisfies a preset condition, set delayed release time t corresponding to the condition as delayed release time of the TBF connection. Different conditions correspond to different delayed release time.

When a TBF connection is established, the setting module 501 checks whether the TBF connection satisfies a preset condition, determines delayed release time t that is corresponding to the condition, and sets the time t as delayed release time of a downlink TBF connection.

The preset condition may be a cell network load, a packet service type, or a combination of the two.

The state module 502 is configured to make the TBF connection enter a delayed release state after data transmission through the TBF connection is completed.

For example, after sending of downlink data is completed, a network side sets the TBF connection to a delayed release state and instructs an MS that the TBF connection is to enter the delayed release state.

The releasing module 503 is configured to release the TBF connection if duration of the delayed release state of the TBF connection reaches the t.

For example, if the TBF connection is a downlink TBF connection, the releasing module 503 may send a downlink radio link control RLC data block to a mobile station MS through the downlink TBF connection, where a final block indicator FBI of the RLC data block is 1, and after receiving a response from the MS, release a radio resource occupied by the downlink TBF connection.

Alternatively, if the TBF connection is an uplink TBF connection, the releasing module 503 may send a PACKET UPLINK ACK/NACK message to an MS, where an FAI carried in the message is set to 1, and instructs the MS to release the TBF connection and a network resource occupied by the TBF connection.

Further, the setting module 501 in the apparatus provided in this embodiment may further be configured to, if a condition that the TBF connection satisfies changes, set the delayed release time of the TBF connection according to a changed condition.

For example, if the condition includes a cell network load and after the cell network load changes, the setting module 501 changes the delayed release time t of the TBF connection according to a changed cell network load.

Alternatively, if the condition includes a type of a packet service, after a type of a packet service that a TBF bears changes, the setting module 501 changes the delayed release time t of the TBF connection according to a changed packet service type.

Definitely, the condition may also include some other factors, which is not limited to the foregoing example.

With the apparatus provided in the foregoing embodiment, different delayed release time may be set for a TBF connection according to a different condition, so that a network resource may be used efficiently.

The apparatus provided in this embodiment may be a base station controller or a radio network controller.

Steps of the method or algorithm described in the embodiments disclosed in the foregoing may be directly implemented by using hardware, a software module executed by a processor, or a combination of the two. The software module may be placed in a random access memory RAM, a memory, a read-only memory ROM, an electrically programmable ROM, an electrically erasable programmable ROM, a register, a hard disk, a removable magnetic disk, a CD-ROM, or any storage medium of other forms well-known in the art.

The foregoing descriptions are merely exemplary embodiments related to the present invention, but are not intended to limit the present invention.

## Claims

1. A method for delayed release of a temporary block flow, TBF, comprising:
establishing (201), by a network side, a TBF connection with a mobile station, MS, and transmitting packet service data;
checking (203), by the network side, a type of a packet service that the TBF connection bears;
setting (205), by the network side, delayed release time t of the TBF connection according to the checked service type;
if the TBF connection is a downlink TBF connection, sending (206), by the network side, packet service data to the MS through the downlink TBF connection;
making (S207), by the network side, the TBF connection enter a delayed release state after data transmission through the TBF connection is completed; and
releasing (S209), by the network side, the TBF connection if duration of the delayed release state of the TBF connection reaches the t, **characterised in that** it further comprises:
checking (211), by the network side, whether the type of the packet service that the TBF connection bears changes in the data transmission process, if a change occurs, resetting the delayed release time t of the TBF connection according to the changed packet service type after the type of the packet service that the TBF connection bears changes;

2. The method according to claim 1, wherein the type of the packet service that the TBF connection bears comprises at least one of the following: an instant message service, a World Wide Web service, an online streaming service, and a file transfer protocol service.

3. The method according to claim 1 or 2, wherein the setting the corresponding delayed release time t for the TBF connection according to the type of the packet service that the TBF connection bears comprises:
delayed release time t of a TBF connection that corresponds to the instant message service is shorter than delayed release time t of a TBF connection that corresponds to the file transfer protocol service.

4. An apparatus for delayed release of a temporary block flow, TBF, comprising:
a setting module (501), configured to, if a TBF connection satisfies a preset condition, set delayed release time t corresponding to the condition as delayed release time of the TBF connection, wherein the preset condition comprises a type of a packet service that the TBF connection bears;
a state module (502), configured to make the TBF connection enter a delayed release state after data transmission through the TBF connection is completed; and
a releasing module (503), configured to release the TBF connection if duration of the delayed release state of the TBF connection reaches the t, **characterised in that**
the setting module (501) is further configured to change the delayed release time t of the TBF connection according to the changed packet service type after the type of the packet service that the TBF connection bears changes.

5. The apparatus according to claim 4, wherein the type of the packet service comprises at least one of the following: an instant message service, a World Wide Web service, an online streaming service, and a file transfer protocol service.

6. The apparatus according to claim 4 or 5, wherein the setting module (501) is configured to set corresponding delayed release time t for the TBF connection according to the type of the packet service that the TBF connection bears.

7. The apparatus according to claim 6, wherein delayed release time t set by the setting module (501) for a TBF connection that corresponds to the instant message service is shorter than delayed release time t set by the setting module for a TBF connection that corresponds to the file transfer protocol service.

8. A base station controller, comprising the apparatus for delayed release of a temporary block flow (TBF) according to any one of claims 4 to 7.

## Patentansprüche

1. Verfahren zur verzögerten Freigabe eines temporären Blockstroms (Temporary Block Flow, TBF), umfassend:
Festlegen (201) durch eine Netzwerkseite einer TBF-Verbindung mit einer Mobilfunkstation, MS, und Übertragen von Paketdienstdaten;
Prüfen (203) durch die Netzwerkseite einer Art eines Paketdienstes, die von der TBF-Verbindung getragen wird;
Einstellen (205) durch die Netzwerkseite einer verzögerten Freigabezeit t der TBF-Verbindung gemäß der geprüften Dienstart;
wenn die TBF-Verbindung eine TBF-Verbindung für eine Abwärtsübertragung ist,
Senden (206) von Paketdienstdaten durch die Netzwerkseite an die MS über die TBF-Verbindung für eine Abwärtsübertragung;
Veranlassen (S207) durch die Netzwerkseite, dass die TBF-Verbindung in einen verzögerten Freigabezustand eintritt, nachdem die Datenübertragung durch die TBF-Verbindung beendet wurde; und
Freigeben (S209) der TBF-Verbindung durch die Netzwerkseite, wenn die Dauer des verzögerten Freigabezustands der TBF-Verbindung die t erreicht, **dadurch gekennzeichnet, dass** das Verfahren außerdem umfasst:
Prüfen (211) durch die Netzwerkseite, ob sich die Art des Paketdienstes, die von der TBF-Verbindung getragen wird, in dem Datenübertragungsprozess verändert, und, wenn eine Änderung auftritt, Zurücksetzen der verzögerten Freigabezeit t der TBF-Verbindung gemäß der geänderten Paketdienstart, nachdem sich die Art des Paketdienstes ändert, die von der TBF-Verbindung getragen wird.

2. Verfahren nach Anspruch 1, wobei die Art des Paketdienstes, die von der TBF-Verbindung getragen wird, mindestens einen der Folgenden umfasst: einen Sofortnachrichtendienst, einen World-Wide-Web-Dienst, einen Online-Datenstromdienst und einen Dateiübertragungsprotokolldienst.

3. Verfahren nach Anspruch 1 oder 2, wobei das Einstellen der verzögerten Freigabezeit t für die TBF-Verbindung gemäß der Art des Paketdienstes, die von der TBF-Verbindung getragen wird, umfasst:
dass die verzögerte Freigabezeit t einer TBF-Verbindung, die dem Sofortnachrichtendienst entspricht, kürzer ist als die verzögerte Freigabezeit t einer TBF-Verbindung, die dem Dateiübertragungsprotokolldienst entspricht.

4. Vorrichtung zur verzögerten Freigabe eines temporären Blockstroms, TBF, umfassend:
ein Einstellmodul (501), das konfiguriert ist, wenn eine TBF-Verbindung eine voreingestellte Bedingung erfüllt, eine verzögerte Freigabezeit t einzustellen, welche der Bedingung als verzögerte Freigabezeit der TBF-Verbindung entspricht, wobei die voreingestellte Bedingung eine Art eines Paketdienstes umfasst, die von der TBF-Verbindung getragen wird;
ein Zustandsmodul (502), das konfiguriert ist, zu veranlassen, dass die TBF-Verbindung in einen verzögerten Freigabezustand eintritt, nachdem die Datenübertragung durch die TBF-Verbindung beendet wurde; und
ein Freigabemodul (503), das konfiguriert ist, die TBF-Verbindung freizugeben, wenn die Dauer des verzögerten Freigabezustands der TBF Verbindung die t erreicht, **dadurch gekennzeichnet, dass**
das Einstellmodul (501) außerdem konfiguriert ist, die verzögerte Freigabezeit t der TBF-Verbindung gemäß der veränderten Paketdienstart zu ändern, nachdem sich die Art des Paketdienstes ändert, die von der TBF-Verbindung getragen wird.

5. Vorrichtung nach Anspruch 4, wobei die Art des Paketdienstes mindestens einen der Folgenden umfasst: einen Sofortnachrichtendienst, einen World-Wide-Web-Dienst, einen Online-Datenstromdienst und einen Dateiübertragungsprotokolldienst.

6. Vorrichtung nach Anspruch 4 oder 5, wobei das Einstellmodul (501) konfiguriert ist, die entsprechende verzögerte Freigabezeit t für die TBF-Verbindung gemäß der Art des Paketdienstes einzustellen, die von der TBF-Verbindung getragen wird.

7. Vorrichtung nach Anspruch 6, wobei die verzögerte Freigabezeit t, die von dem Einstellmodul (501) für eine TBF-Verbindung eingestellt wurde, die dem Sofortnachrichtendienst entspricht, kürzer ist, als die verzögerte Freigabezeit t, die von dem Einstellmodul für eine TBF-Verbindung eingestellt wurde, die dem Dateiübertragungsprotokolldienst entspricht.

8. Eine Basisstationssteuereinheit, die die Vorrichtung für eine verzögerte Freigabe eines temporären Blockstroms (TBF) nach einem der Ansprüche 4 bis 7 umfasst.

## Revendications

1. Procédé de libération retardée d'un flux de blocs temporaires, TBF, comprenant :
l'établissement (201), par un côté réseau, d'une connexion TBF avec une station mobile, MS, et la transmission de données de service par paquets ;
la vérification (203), par le côté réseau, d'un type de service par paquets qu'achemine la connexion TBF ;
l'établissement (205), par le côté réseau, d'un temps de libération retardée t de la connexion TBF en fonction du type de service vérifié ;
si la connexion TBF est une connexion TBF de liaison descendante, l'envoi (206), par le côté réseau, de données de service par paquets à la MS par le biais de la connexion TBF de liaison descendante ;
le passage de la connexion TBF, sur incitation (S207), par le côté réseau, à un état de libération retardée au terme de la transmission de données par le biais de la connexion TBF ; et
la libération (S209), par le côté réseau, de la connexion TBF si la durée de l'état de libération retardée de la connexion TBF atteint le temps t, **caractérisé en ce qu'**il comprend en outre :
la vérification (211), par le côté réseau, que le type du service par paquets qu'achemine la connexion TBF change dans le processus de transmission de données, si un changement se produit, la remise à zéro du temps de libération retardée t de la connexion TBF en fonction du type de service par paquets changé après que le type du service par paquets qu'achemine la connexion TBF a changé.

2. Procédé selon la revendication 1, dans lequel le type du service par paquets qu'achemine la connexion TBF comprend au moins l'un des types suivants : service de messages instantanés, service Internet, service de diffusion continue en ligne, et service à protocole de transfert de fichiers.

3. Procédé selon la revendication 1 ou 2, dans lequel dans l'établissement du temps de libération retardée t correspondant de la connexion TBF en fonction du type de service par paquets qu'achemine la connexion TBF :
un temps de libération retardée t d'une connexion TBF qui correspond au service de messages instantanés est plus court que le temps de libération retardée t d'une connexion TBF qui correspond au service à protocole de transfert de fichiers.

4. Appareil de libération retardée d'un flux de blocs temporaires, TBF, comprenant :
un module d'établissement (501), configuré pour, si une connexion TBF satisfait une condition préétablie, établir un temps de libération retardée t correspondant à la condition comme temps de libération retardée de la connexion TBF, la condition préétablie comprenant un type de service par paquets qu'achemine la connexion TBF ;
un module d'état (502), configuré pour inciter la connexion TBF à passer à un état de libération retardée au terme de la transmission de données par le biais de la connexion TBF ; et
un module de libération (503), configuré pour libérer la connexion TBF si la durée de l'état de libération retardée de la connexion TBF atteint le temps t, **caractérisé en ce que**
le module d'établissement (501) est configuré en outre pour changer le temps de libération retardée t de la connexion TBF en fonction du type de service par paquets changé après que le type du service par paquets que porte la connexion TBF a changé.

5. Appareil selon la revendication 4, dans lequel le type de service par paquets comprend au moins l'un des types suivants : service de messages instantanés, service Internet, service de diffusion continue en ligne, et service à protocole de transfert de fichiers.

6. Appareil selon la revendication 4 ou 5, dans lequel le module d'établissement (501) est configuré pour établir le temps de libération retardée t correspondant de la connexion TBF en fonction du type de service par paquets qu'achemine la connexion TBF.

7. Appareil selon la revendication 6, dans lequel le temps de libération retardée t établi par le module d'établissement (501) d'une connexion TBF qui correspond au service de messages instantanés est plus court que le temps de libération retardée t établi par le module d'établissement d'une connexion TBF qui correspond au service à protocole de transfert de fichiers.

8. Contrôleur de station de base, comprenant l'appareil de libération retardée d'un flux de blocs temporaires (TBF) selon l'une quelconque des revendications 4 à 7.
